# EUROPEAN PATENT APPLICATION

(11) **EP 1 612 703 A1**
(43) Date of publication of application: **04.01.2006**
(21) Application number: 05105667.9
(22) Date of filing: 24.06.2005
(51) Int. Cl.: G06F 17/30, G06F 11/32

(54) **Integrating best practices into database design**

(30) Priority: 28.06.2004 US 878583
(71) Applicant: MICROSOFT CORPORATION, Redmond, Washington 98052-6399 (US)
(72) Inventor: Kleinerman, Christian, 98052, Redmond (US); Garden, Euan P., 98052, Redmond (US); Raheem, Michael S., 98052, Redmond (US)
(74) Representative: Grünecker, Kinkeldey, Stockmair & Schwanhäusser Anwaltssozietät

(57) **Abstract**

Best practice guidelines are integrated into the design of database applications so that it is less likely that inappropriate values are set. A proposed value for a database object may be compared to an archive of best practice guidelines. If the proposed value does not comply with best practice guidelines, a best practice recommendation may be provided, and an opportunity may be provided to change the proposed value to the recommended value before the database object is manipulated or the setting persisted.

## Description

### FIELD OF THE INVENTION

The invention relates to computing and in particular to integrating best practice guidelines into database design.

### BACKGROUND OF THE INVENTION

Database design involves the creation of objects including databases, tables, views, stored procedures, datatypes, triggers, indexes, *etc.* These objects have properties to which values must be associated, either in isolation or in relation to each other. In general, in the creation of a database object, one or more verification processes are performed to ensure the correctness of the value being set. Typically, after verification of correctness, the creation statement is executed by the database system, resulting in the creation of the object or persistence of the database object setting.

Although the validity or correctness of the value is determined before creating the object, the value is not typically checked for appropriateness. A given value may be appropriate for one database design while the same value, although correct, is inappropriate for another database design. Whether or not a given value is appropriate for a particular database object is typically application-specific and may depend on the values assigned to related objects. Additionally, whether or not a given value is appropriate for a particular object may change or evolve over time. An inappropriate value or set of values may impact the performance, availability and security of the database application, hence appropriately setting the values is of prime importance.

It would be helpful if there were a way to ensure that database object values are appropriately set before the database object is created so that it is less likely that inappropriate values are set.

### SUMMARY OF THE INVENTION

Best practice guidelines are integrated into the design of database applications so that it is less likely that inappropriate values are set. A proposed value for a database object may be compared to an archive of best practice guidelines. If the proposed value does not comply with best practice guidelines, a best practice recommendation may be provided, and an opportunity may be provided to change the proposed value to the recommended value before the database object is manipulated or the setting persisted. An opportunity may also be provided to override the recommended value.

A system for integrating best practices into database design may include a best practices analyzer that receives information associated with a proposed setting for a database object, determines whether additional information concerning the database is required, and if so, retrieves the additional information, and provides feedback concerning the proposed or existing setting before or after the object is manipulated or the setting is persisted.

### BRIEF DESCRIPTION OF THE DRAWINGS

The foregoing summary, as well as the following detailed description of illustrative embodiments, is better understood when read in conjunction with the appended drawings. For the purpose of illustrating the invention, there is shown in the drawings exemplary constructions of the invention; however, the invention is not limited to the specific methods and instrumentalities disclosed. In the drawings:

FIG. 1 is a block diagram showing an exemplary computing environment in which aspects of the invention may be implemented;

FIG. 2 is a flow diagram of a method of integrating best practices into a database design in accordance with one embodiment of the invention;

FIG. 3 is a block diagram of a system for integrating best practices into a database design in accordance with one embodiment of the invention;

FIG. 4 is a block diagram of a system for integrating best practices into a database design showing the flow of information within the system in accordance with one embodiment of the invention; and

FIG. 5 is a flow diagram of another method for integrating best practices into a database design in accordance with one embodiment of the invention.

### DETAILED DESCRIPTION OF ILLUSTRATIVE EMBODIMENTS

### Overview

Suppose a new database of merchandize that can be ordered via the Internet is planned. Suppose a database object includes properties that relate to the size and growth of the database. The "FILEGROWTH" property of the database may indicate how much the database can grow when it fills up and needs more space. "FILEGROWTH" may indicate the database growth increments by a fixed amount (*e*.*g*., every time the space limit is reached, an additional 90 megabytes of space is added to the size of the database) or by a specified percentage (*e*.*g*., every time the space limit is reached, an addition 10% of initial or present database size is added to the space allocated for the database).

Suppose the size of the merchandize database is initially set to ten megabytes and the growth property is set to FILEGROWTH by 10%. If the database space limit were reached during the middle of the day when the system is likely to be busiest, customers would probably experience a response slowdown because of the autogrow process. Hence, setting the growth property of an often-updated, ten megabyte database to FILEGROWTH by 10% may be considered undesirable. It may be a better practice to initially create a larger database, (*e.g.*, a one hundred megabyte database) and schedule its growth by 20% at midnight, when there are likely to be fewer customers.

In accordance with some embodiments of the present invention, an interactive best practices analyzer may be invoked as a database is being set up. The interactive best practices analyzer may refer to information already known about the new database and/or an archive of best practice based values to determine best practice guidelines for the particular database being set up. In response to receiving proposed settings (values) for properties of objects in the database, feedback concerning the proposed values is returned so that appropriate values for the properties of the database objects are more likely to be selected.

Similarly, an existing database may change over time so that initial characteristics of the database are no longer valid. In accordance with some embodiments of the invention, changes made to an existing database are analyzed for compliance with best practice guidelines. Feedback concerning compliance with best practice guidelines may be provided.

### Exemplary Computing Environment

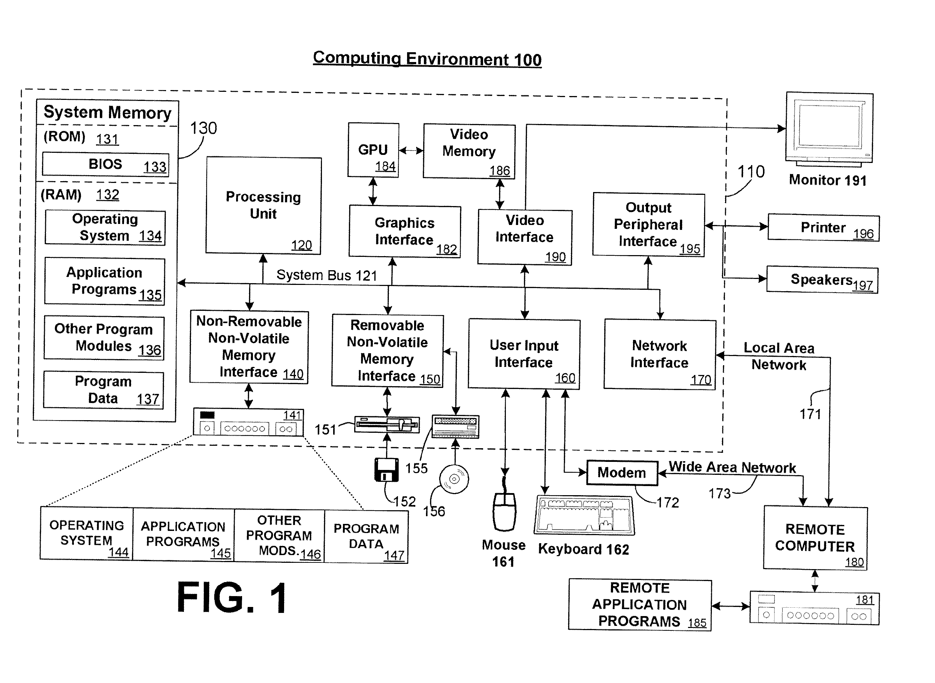

FIG. 1 and the following discussion are intended to provide a brief general description of a suitable computing environment in which the invention may be implemented. It should be understood, however, that handheld, portable, and other computing devices of all kinds are contemplated for use in connection with the present invention. While a general purpose computer is described below, this is but one example, and the present invention requires only a thin client having network server interoperability and interaction. Thus, the present invention may be implemented in an environment of networked hosted services in which very little or minimal client resources are implicated, *e.g.*, a networked environment in which the client device serves merely as a browser or interface to the World Wide Web.

Although not required, the invention can be implemented via an application programming interface (API), for use by a developer, and/or included within the network browsing software which will be described in the general context of computer-executable instructions, such as program modules, being executed by one or more computers, such as client workstations, servers, or other devices. Generally, program modules include routines, programs, objects, components, data structures and the like that perform particular tasks or implement particular abstract data types. Typically, the functionality of the program modules may be combined or distributed as desired in various embodiments. Moreover, those skilled in the art will appreciate that the invention may be practiced with other computer system configurations. Other well known computing systems, environments, and/or configurations that may be suitable for use with the invention include, but are not limited to, personal computers (PCs), automated teller machines, server computers, hand-held or laptop devices, multi-processor systems, microprocessor-based systems, programmable consumer electronics, network PCs, minicomputers, mainframe computers, and the like. The invention may also be practiced in distributed computing environments where tasks are performed by remote processing devices that are linked through a communications network or other data transmission medium. In a distributed computing environment, program modules may be located in both local and remote computer storage media including memory storage devices.

FIG. 1 thus illustrates an example of a suitable computing system environment 100 in which the invention may be implemented, although as made clear above, the computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

With reference to FIG. 1, an exemplary system for implementing the invention includes a general purpose computing device in the form of a computer 110. Components of computer 110 may include, but are not limited to, a processing unit 120, a system memory 130, and a system bus 121 that couples various system components including the system memory to the processing unit 120. The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus (also known as Mezzanine bus).

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CDROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable, volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156, such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1 provide storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies. A user may enter commands and information into the computer 110 through input devices such as a keyboard 162 and pointing device 161, commonly referred to as a mouse, trackball or touch pad. Other input devices (not shown) may include a microphone, joystick, game pad, satellite dish, scanner, or the like. These and other input devices are often connected to the processing unit 120 through a user input interface 160 that is coupled to the system bus 121, but may be connected by other interface and bus structures, such as a parallel port, game port or a universal serial bus (USB).

A monitor 191 or other type of display device is also connected to the system bus 121 via an interface, such as a video interface 190. A graphics interface 182, such as Northbridge, may also be connected to the system bus 121. Northbridge is a chipset that communicates with the CPU, or host processing unit 120, and assumes responsibility for accelerated graphics port (AGP) communications. One or more graphics processing units (GPUs) 184 may communicate with graphics interface 182. In this regard, GPUs 184 generally include on-chip memory storage, such as register storage and GPUs 184 communicate with a video memory 186. GPUs 184, however, are but one example of a coprocessor and thus a variety of coprocessing devices may be included in computer 110. A monitor 191 or other type of display device is also connected to the system bus 121 via an interface, such as a video interface 190, which may in turn communicate with video memory 186. In addition to monitor 191, computers may also include other peripheral output devices such as speakers 197 and printer 196, which may be connected through an output peripheral interface 195.

The computer 110 may operate in a networked environment using logical connections to one or more remote computers, such as a remote computer 180. The remote computer 180 may be a personal computer, a server, a router, a network PC, a peer device or other common network node, and typically includes many or all of the elements described above relative to the computer 110, although only a memory storage device 181 has been illustrated in FIG. 1. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on memory device 181. It will be appreciated that the network connections shown are exemplary and other means of establishing a communications link between the computers may be used.

One of ordinary skill in the art can appreciate that a computer 110 or other client device can be deployed as part of a computer network. In this regard, the present invention pertains to any computer system having any number of memory or storage units, and any number of applications and processes occurring across any number of storage units or volumes. The present invention may apply to an environment with server computers and client computers deployed in a network environment, having remote or local storage. The present invention may also apply to a standalone computing device, having programming language functionality, interpretation and execution capabilities.

### Integration of best practice guidelines into database design

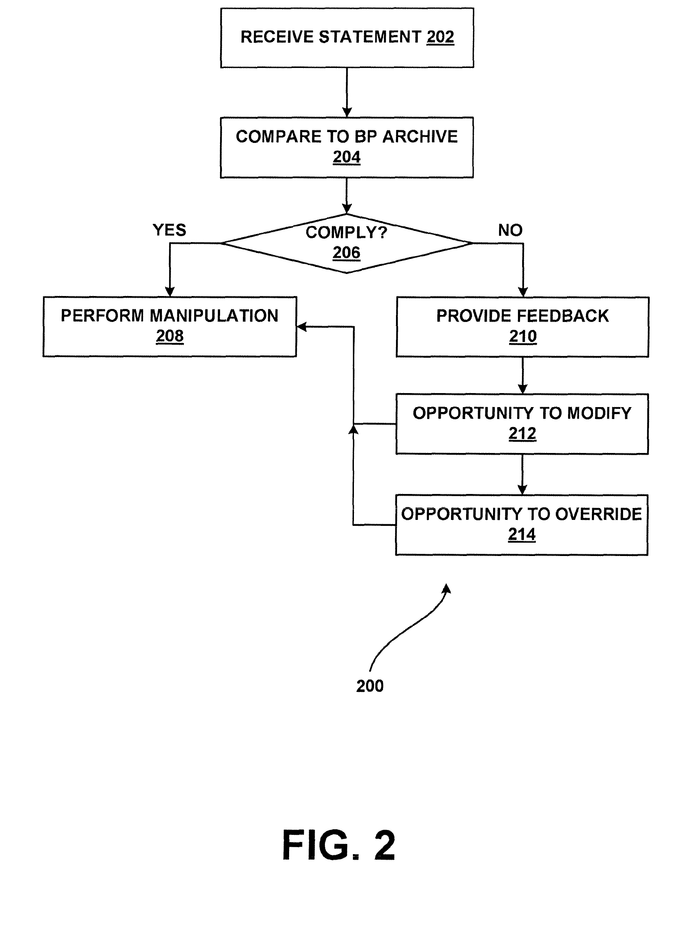

FIG. 2 is a flow diagram of an exemplary method 200 for integrating best practice guidelines into a database design. One or more of the steps of method 200 may be optional.

At step 202 a proposed object manipulation statement or group of statements may be received. In some embodiments of the invention, object manipulation statements may include operations such as but not limited to BACKUP and RESTORE. Exemplary object manipulation statements may include CREATE, ALTER, DROP, SHRINK, ATTACH, DETACH, BACKUP, and RESTORE statements as well as others. In some embodiments of the invention, object manipulation statements are provided in a Data Definition Language (DDL) such as ANSI (American National Standards Institute) SQL DDL although the invention as contemplated is not limited thereto.

In some embodiments of the invention, the proposed object manipulation statement is validated to determine if the proposed value to be assigned to the database object is valid or correct, that is, that such a value is an allowable value for the object. One or more levels of validation may be performed.

At step 204 the proposed values may be compared to an archive of values considered to represent a best practice for a database of the type being created, designed, altered or operated upon.

At step 206, the statement may be analyzed to determine if it complies with best practices, that is, if the value is considered to be an appropriate value for the particular database with which the object is associated. At step 208, if the statement complies with best practices, the object may be manipulated in accordance with the object manipulation statement (*e*.*g*., the object may be created or altered, the property value persisted, *etc.).* At step 210, if the statement does not comply with best practices, feedback may be returned comprising information associated with related best practice guideline(s). The feedback returned may include the option to receive a more complete explanation for the recommendation. Feedback may also be provided for a value that complies with best practices before the manipulation is performed.

At step 212, an opportunity may be provided to modify the proposed value. If the proposed value is modified to comply with the best practices recommendation, the manipulation may be performed at step 208. At step 214, an opportunity to override the best practice recommendation may be provided. If the recommendation is overridden, the manipulation may be performed at step 208, using the non-compliant value.

Suppose, for example, a user wants to create a stored procedure to return the sales information for a given order. The user may enter the following (step 202): 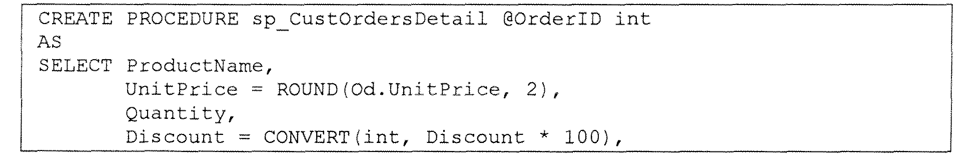 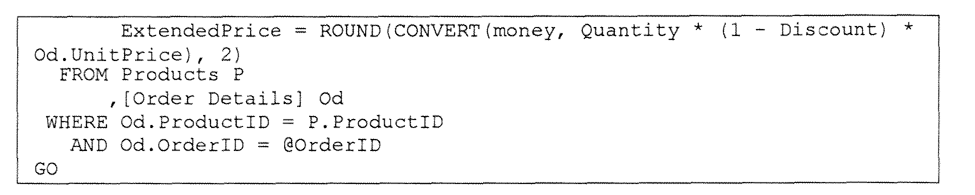 At step 204 the Create Procedure may be analyzed and it may be determined that calling this procedure with a name beginning with "sp_" is not a best practice. At step 210, feedback may be returned in the form of a dialog box which includes a message such as: "You have used sp_ for your naming convention for your stored procedure. This is not a best practice. The recommended naming convention is: 'usp_'. For more information about why this is not a best practice select X". That is, in this example, the appropriate name of the stored procedure above should be usp_CustOrdersDetail. Hence a best-practices compliant stored procedure may be as follows:

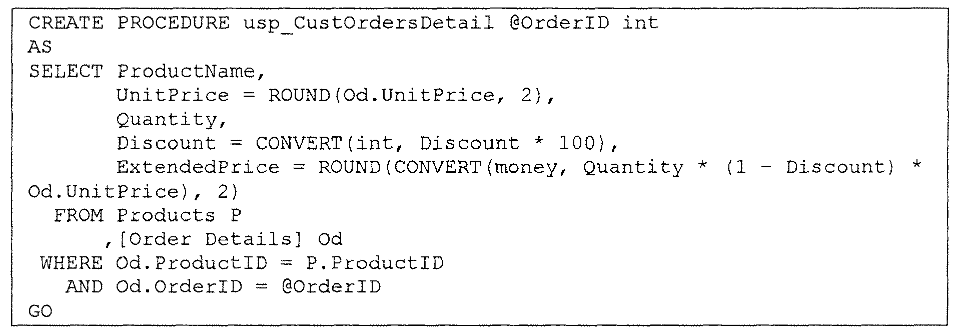

At step 212, an opportunity may be provided to modify the stored procedure. If the stored procedure is modified to comply with the best practices recommendation, the object may be created at step 208.

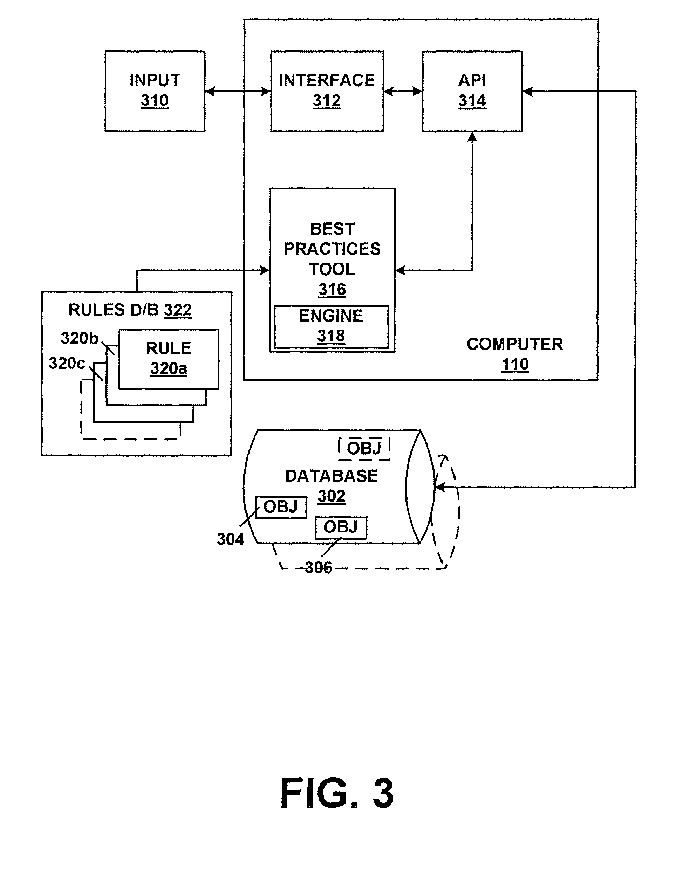

FIG. 3 is a block diagram of a system for integrating best practice guidelines into a database design. The system may be used to create a new database object or to alter or modify an existing database object. The database objects may reside in one or more databases installed on one or more computers. A system for integrating best practice guidelines into a database design may reside on a computer such as computer 110 described above with respect to FIG. 1 or may be distributed across one or more computers connected via a network as described with respect to FIG. 1.

A system for integrating best practice guidelines into a database design in accordance with some embodiments of the invention may include one or more of the following components: an interface 312 that receives input 310 and transfers information associated with input 310 to API (Applications Programming Interface) module 314; API 314 that receives information associated with input 310 and transfers information associated therewith to best practices tool 316; best practices tool 316 that receives information associated with input 310 from API 314 and returns information associated with best practices to API 314; a best practices rules datastore 322; and one or more databases such as database 302.

A database such as database 302 may include a number of objects such as objects 304, 306, *etc.* Objects 304, 306, *etc.* may be created, altered, changed, deleted and/or operated upon. These objects may be associated with properties such as size, ownership, security and so on. Database 302 may be a relational database management system (RDMS) such as Microsoft SQL Server, Microsoft Access, Oracle, IBM DB2, Informix, Sybase, MySql, InterBase, *etc.*

Datastore 322 may include one or more rules or best practices. In some embodiments of the invention, there are a series of rules or best practices 320a, 320b, 320c, *etc.* associated with database 302 and with the objects 304, 306, *etc.* within database 302. Rules 320a, 320b, 320c, *etc.* may be implementation-specific, that is datastore 322 may include only those best practices guidelines associated with a database with characteristics compatible with database 302. Alternatively, datastore 322 of rules 320a, 320b, 320c, *etc.* may comprise a datastore of best practices for a number of different types of databases from which the best practice guidelines associated with a database like database 302 are selected for application to database 302.

A best practices tool 316 (which in some embodiments includes a best practices engine 318) may read one or more rules 320a, 320b, 320c, *etc.* which tell the best practices engine 318 how to test database 302 in terms of best practices. In some embodiments of the invention, the best practices engine 318 is extensible, that is, new rules can be added to the database of rules 322.

Rules 320a, 320b, 320c, *etc.* may have greater or lesser context or appropriateness within a given database. For example, some rules may apply to virtually all types of databases. Other rules may apply only to those databases having particular settings or characteristics. For example, a given rule may apply depending on the size of the database, the complexity of the database or be based on some characteristic or group of characteristics of the database. In some embodiments of the system, the group of rules applied to the database are determined by characteristics of the database to be implemented or modified. Rules 320a, 320b, 320c, *etc.* may collectively comprise a datastore 322, implemented as a file, collection of files, database or so on. Datastore 322 or one or more rules 320a, 320b, 320c, *etc.* may reside on computer 110 and/or may be downloaded from a remote site on a computer network such as the Internet and/or may reside on one or more computers within a network of computers.

In some embodiments of the invention, an interface 312 receives input 310 concerning objects 304, 306, *etc.* and properties associated with the objects 304, 306, *etc.* Interface 312 may comprise one or multiple layers representing levels of granularity within the interface. Input 310 may include information associated with an object manipulation operation such as backup, restore, creation, alteration or removal *etc.* of objects 304, 306, *etc.* In some embodiments, for example, input 310 may comprise a statement or group of statements to create or modify a stored procedure or an ALTER statement to change the FILEGROWTH of a database, as described above. The input may be in a Data Definition Language associated with the RDMS. Interface 312 in some embodiments receives input 310 and sends information associated with input 310 to API 314. API 314 in some embodiments communicates with best practices tool 316 to determine if the input 310 complies with best practices for the database 302.

If the input complies with the best practices rules database 322, in some embodiments the database 302 is updated, the object(s) created or the setting(s) are persisted, *etc*. as described above, in accordance with the input 310 by API 314. If the input does not comply with the best practices rules database 322, a message may be returned via API 314 and interface 312 indicating, for example, that a specified setting is not in compliance with best practices. In some embodiments the non-compliant setting can be overridden. In some embodiments the non-compliant setting is changed to a pre-determined value. The message may be returned via a dialog box on a display screen, programmatically to a program module or via any suitable means.

In some embodiments of the invention, groups of settings associated with groups of objects are examined and the best practice rule or rules to be applied are determined by the combination of settings and objects.

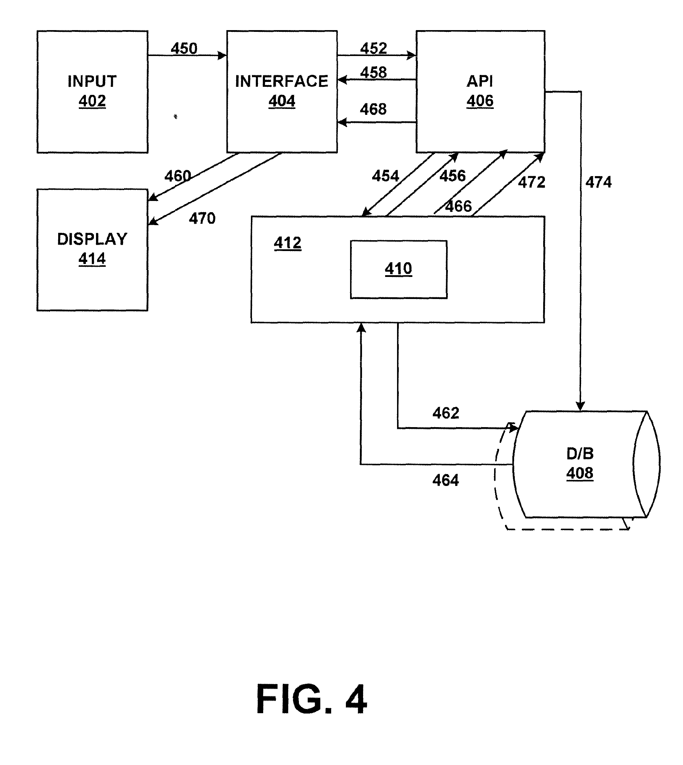

FIG. 4 is a block diagram of a system for integrating best practices within a database design, showing interactions between components.

As indicated by arrow 450, input 402 may be supplied to a user interface 404. In some embodiments of the invention, input 402 may be one or more proposed settings for one or more properties of one or more objects of a database to be implemented or altered or other object manipulation operations as described above. Input 402 may be supplied by a user such as but not limited to a database administrator, or may be provided via an automated database creation tool. As indicated by arrow 452, the user interface 404 may communicate with an API 406 that interfaces between the user interface 404 and a database 408, providing API 406 with the information collected from the input 402 and (optionally) information associated with input 402. In some embodiments of the invention API 406 may create a working copy of the object. As indicated by arrow 454, API 406 may interface with a best practices engine 410 of a best practices analyzer 412, providing information about the object(s) and (optionally) information about database 408 to the best practices analyzer 412. As indicated by arrow 456, the best practices analyzer 412 may determine that enough information is available to return best practices information to API 406. The best practices information may be returned to interface 404 as indicated by arrow 458. Interface 404 may display the best practices information on display 414 as indicated by arrow 460 or otherwise return the information (e.g., programmatically to another module).

Alternatively, the best practices analyzer 412 may determine that insufficient information is available to return an answer to API 406 and may, as indicated by arrow 462, access the database 408 to determine what has already been set up for the database 408 (e.g., to determine the context for the object within the database). As indicated by arrow 464 information may be returned from the database 408 to the best practices analyzer 412. Based on the information received from the API 406 and the database 408, the best practices analyzer 412 may analyze the proposed setting(s) received in input 402 within the context of database 408 and return best practices information to API 406, as indicated by arrow 466. This information may be returned to interface 404 as indicated by arrow 468 for display (arrow 470) on display 414.

Alternatively, the best practices analyzer 412 may determine that the information received from the API and optionally from the database 408 represent a best practice and may return this information to API 406 (arrow 472). API 406 may update database 408, (arrow 474) persisting the created, modified or otherwise manipulated database object. A message indicating that the database has been updated (the setting persisted) may be returned via the API 406 and the user interface 404. At this point, the process may be repeated until the session is ended.

Best practices information may comprise information such as an explanation why the proposed settings do not constitute a best practice, recommendations as to what the settings should be, locations of further information concerning the best practice recommendations and so on. In some embodiments of the invention, the best practice recommendations may be overridden. Alternatively, some best practice recommendations may be enforced.

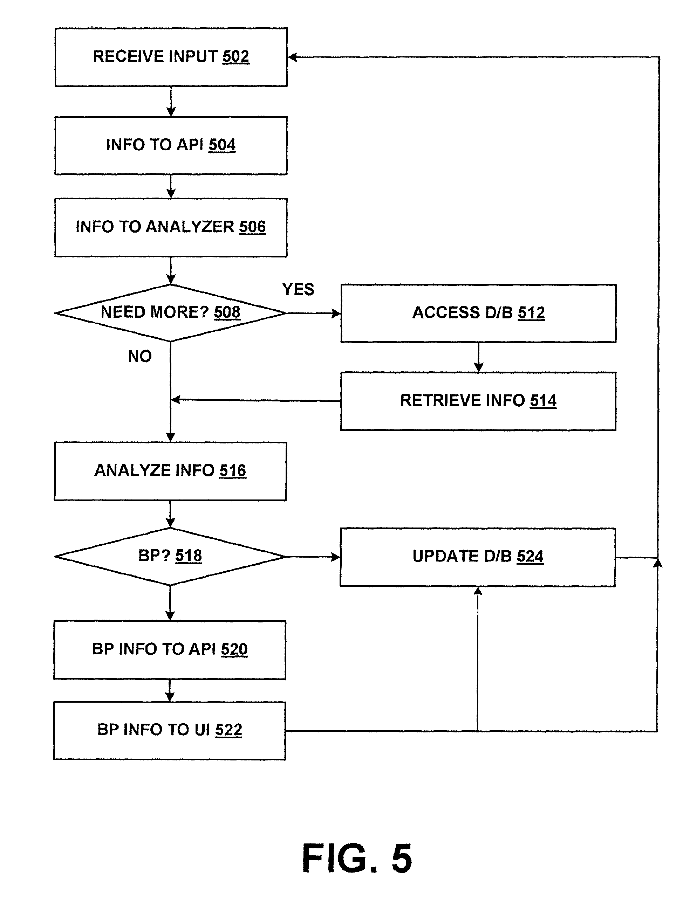

FIG. 5 is a flow diagram of a method for integrating best practices into database design in accordance with some embodiments of the invention. One or more of the steps of the method may be optional or omitted. At step 502 input may be received. As described above, the input may be proposed settings for objects in a database. For example, suppose a user is setting up back-up policies for a large (one terabyte) enterprise-level merchandize database. In this case, the input may represent that the database A is to be fully backed up every day at 3pm Pacific Standard Time.

At step 504, the input information may be sent to the API. For example, the backup time/frequency of 3pm PST/once a day for database A may be sent to the API. The API may create a copy of the back-up object with the 3pm PST/once a day setting.

At step 506, information associated with the input information may be sent to the Best Practices analyzer. For example, the back-up time/frequency of 3pm PST/once a day for database A may be sent to the best practices analyzer.

At step 508, the input information may be examined for completeness. If no additional information is required, processing may continue at step 516. If additional information is required, processing may continue at step 512. For example, if the input received does not include information associated with the size of the database, the nature of the database and an indication of how often the database is likely to change, the best practices analyzer may determine that insufficient information is present to return a best practice recommendation. At step 512, the database may be accessed to retrieve the required information (step 514). For example, at step 512, database A may be accessed to determine the additional information. The information returned from database A (step 514) may indicate that database A is a high-transaction-volume, enterprise-level, one-terabyte database of merchandize accessible for purchase over the Internet.

At step 516 the best practices analyzer may analyze the input information and the information retrieved from the database. For example, the best practices analyzer may analyze the input information backup time/frequency of 3pm PST/once a day for database A and the information retrieved from the database: a highly transactional, enterprise-level, one-terabyte database of merchandize accessible for purchase over the Internet. At step 518 the best practices analyzer may determine if the input received at step 502 comprises a best practice (for a static rule) or may determine that the input received at step 502 within the context of the information retrieved from the database at step 514 (for a dynamic rule) comprises a best practice. If so, processing continues at step 524 and the properties of the appropriate object in the database are updated or set (persisted) and processing returns to step 502. If not, processing may continue at step 520 and best practices information is returned to the API at step 520 and to the interface at step 522. At this point processing may return to step 502 for additional input to be received. Alternatively, the best practice recommendations may be overridden and the database design may be updated with the proposed settings.

It will be understood that the examples of properties cited above, (*i*.*e*., frequent "autogrow" option for a rapidly growing database or creating a full back-up of a large and busy database at 3pm PST) are examples of settings that are appropriate for some databases and inappropriate for others. Analysis of such a rule may require the database to be accessed as described above with respect to steps 512 and 514. For example, setting a database to frequently autogrow is not necessarily a bad practice. For example, frequent autogrow feature of Microsoft's SQL SERVER® may be appropriate for small databases with relatively small loads, but may become less and less appropriate the larger the database and the larger the load until at some point frequent autagrow is no longer considered a best practice.

Similarly, setting a full back-up to once a day at 3pm PST may be entirely appropriate for a lightly used home database and entirely inappropriate for a large public database that is updated several thousand times a day.

Other database object properties may apply to substantially all databases. Accessing the database as described above with respect to steps 512 and 514 may not be required. An example of such a property may be the naming of a piece of functional code called a stored procedure. It may be considered a bad practice to name the stored procedure with a name beginning with "sp_" for reasons due to access speed.

It will be understood that while the above embodiments have been described within the context of a database system, the invention as contemplated is not so limited. For example, the above described may be applied to any server product including but not limited to including: Microsoft SQL Server, Microsoft Access, Oracle, IBM DB2, Informix, Sybase, MySql, InterBase, *etc.* Similarly, although the above has been described within the context of objects as implemented by an object-oriented language, the invention as contemplated is not so limited, any programming technology or combination of programming technologies may be employed in the coding and implementation of the server products discussed.

The various techniques described herein may be implemented in connection with hardware or software or, where appropriate, with a combination of both. Thus, the methods and apparatus of the present invention, or certain aspects or portions thereof, may take the form of program code (i.e., instructions) embodied in tangible media, such as floppy diskettes, CD-ROMs, hard drives, or any other machine-readable storage medium, wherein, when the program code is loaded into and executed by a machine, such as a computer, the machine becomes an apparatus for practicing the invention. In the case of program code execution on programmable computers, the computing device will generally include a processor, a storage medium readable by the processor (including volatile and non-volatile memory and/or storage elements), at least one input device, and at least one output device. One or more programs that may utilize the creation and/or implementation of domain-specific programming models aspects of the present invention, e.g., through the use of a data processing API or the like, are preferably implemented in a high level procedural or object oriented programming language to communicate with a computer system. However, the program(s) can be implemented in assembly or machine language, if desired. In any case, the language may be a compiled or interpreted language, and combined with hardware implementations.

While the present invention has been described in connection with the embodiments of the various figures, it is to be understood that other similar embodiments may be used or modifications and additions may be made to the described embodiments for performing the same function of the present invention without deviating therefrom. Therefore, the present invention should not be limited to any single embodiment, but rather should be construed in breadth and scope in accordance with the appended claims.

## Claims

1. A system for integrating a best practice guidelines into a server product design comprising:
a best practices analyzer that receives a proposed object manipulation statement associated with an object manipulation for a server product object and compares the proposed object manipulation statement to a best practice rule for the server product object before performing the object manipulation.

2. The system of claim 1, wherein the best practices analyzer returns a best practice recommendation for the object manipulation.

3. The system of claim 1, wherein in response to determining that the proposed object manipulation statement complies with the best practice rule for the server product object, the object manipulation is performed.

4. The system of claim 1, wherein in response to determining that the proposed object manipulation statement fails to comply with the best practice rule for the server product object, a best practice recommendation is returned.

5. The system of claim 1, further comprising an interface for receiving the proposed object manipulation statement and transferring information associated with the proposed object manipulation statement to an applications programming interface module, the applications programming interface module transferring the information associated with the proposed object manipulation statement to the best practices analyzer.

6. The system of claim 1, further comprising an applications programming interface that transfers a best practice recommendation to a user interface from the best practices analyzer.

7. The system of claim 1, further comprising an applications programming interface that performs the object manipulation.

8. The system of claim 1, wherein the best practices analyzer selects the best practice rule for the server product and applies the best practice rule to the proposed object manipulation statement to determine if the object manipulation complies with a recommended practice.

9. The system of claim 1, further comprising a best practices rules datastore comprising a first rule and a second rule, the first rule comprising the best practice rule for the server product.

10. The system of claim 1, wherein the server product object comprises a portion of a server product and the server product comprises a database.

11. The system of claim 10, wherein the database is a SQL database.

12. The system of claim 1, wherein the proposed object manipulation statement comprises an operation.

13. The system of claim 1, wherein the proposed object manipulation statement comprises a proposed property setting.

14. A method for integrating best practices into a database design comprising:
receiving an object manipulation statement for a database object of a database, the object manipulation statement comprising a value for a property of the database object;
analyzing the object manipulation statement within a context of the database design;
in response to determining that the value complies with a best practice rule for the database object, persisting the value for the property of the database object.

15. A method for integrating best practices into a database design comprising:
receiving an object manipulation statement for a database object of a database, the object manipulation statement comprising a value associated with the database object;
analyzing the object manipulation statement to determine if the value complies with a best practice rule for the database object of the database; and
in response to determining that the value fails to comply with the best practice rule for the database object of the database, providing information associated with the best practice rule before manipulating the database object according to the object manipulation statement.

16. The method of claim 15, wherein the database is a SQL database.

17. The method of claim 15, wherein the object manipulation statement is received by a user interface, the user interface transferring information associated with the object manipulation statement to an applications programming interface.

18. The method of claim 15, wherein a best practice analyzer retrieves information associated with the object manipulation statement from the database.

19. The method of claim 15, wherein an applications programming interface transfers information associated with the object manipulation statement to a best practices analyzer.

20. The method of claim 15, wherein a best practices analyzer selects the best practice rule associated with the database object from a best practice datastore and determines if the value complies with the best practice rule.

21. The method of claim 15, wherein analyzing the object manipulation statement comprises:
selecting the best practice rule associated with the database object of the database.

22. The method of claim 15, further comprising providing an opportunity to modify the value to comply with the best practice rule.

23. The method of claim 15, further comprising persisting the value.

24. A system for analyzing a proposed property setting of a database object to determine if the proposed property setting complies with a best practice rule comprising:
a best practice analyzer that receives the proposed property setting for the database object of a database, and provides a best practice property setting for the database object before persisting the database object.

25. The system of claim 24, further comprising
a user interface for receiving the proposed property setting and sending information associated with the proposed property setting to an applications programming interface.

26. The system of claim 24, further comprising:
an applications programming interface for receiving information associated with the proposed property setting and persisting the proposed property setting in the database.

27. The system of claim 24, further comprising:
a datastore comprising at least one best practice guideline for setting the proposed property setting for the database obj ect within the context of a database.

28. A computer-readable medium comprising computer-readable instructions for:
receiving a proposed property value for a database object in a database;
determining whether the proposed property value complies with an archive of best practice information associated with the database object before the proposed property value is persisted.

29. The computer-readable medium of claim 28, further comprising computer-readable instructions for:
providing information associated with a recommended property value for the database object.

30. The computer-readable medium of claim 28, further comprising computer-readable instructions for:
providing an opportunity to change the proposed property value before the proposed property value is persisted.

31. The computer-readable medium of claim 28, further comprising computer-readable instructions for:
providing an opportunity to override a recommended property setting for the database object.
